# EUROPÄISCHE PATENTSCHRIFT

(11) **EP 1 793 155 B1**
(45) Veröffentlichungstag und Bekanntmachung des Hinweises auf die Patenterteilung: **21.03.2012**
(21) Anmeldenummer: 06121401.1
(22) Anmeldetag: 28.09.2006
(51) Int. Cl.: F16L 41/12

(54) **Rohrschelle, insbesondere Anbohrschelle**
Pipe clamp, in particular tapping pipe clip
Collier de tuyau, notamment collier perce-tuyau

(30) Priorität: 01.12.2005 DE 102005057662
(43) Veröffentlichungstag der Anmeldung: 06.06.2007
(73) Patentinhaber: VIEGA GmbH & Co. KG, 57439 Attendorn (DE)
(72) Erfinder: Eckel, Mario, 57368 Lennestadt (DE); Sinoplu, Sudi, 57439 Attendorn (DE); Ginczek, Christoph, 51709 Marienheide (DE)
(74) Vertreter: Cohausz & Florack

(56) Entgegenhaltungen:
- EP-A- 0 536 427
- EP-A- 1 249 658
- GB-A- 1 324 280
- US-B1- 6 454 312

## Beschreibung

Die vorliegende Erfindung betrifft eine Rohrschelle, insbesondere Anbohrschelle, die um ein Versorgungsrohr festlegbar ist, wobei die Rohrschelle zwei miteinander verbindbare Enden aufweist, die sich im verbundenen Zustand in Umfangsrichtung der Rohrschelle gegenüberliegen. Eine derartige Rohrschelle ist z.B. aus EP 0 536 427 bekannt. Ferner betrifft die Erfindung ein Verfahren zum Festlegen einer Rohrschelle, vorzugsweise einer Anbohrschelle, um ein Versorgungsrohr, wobei die Rohrschelle zwei miteinander verbindbare Enden aufweist.

Anbohrschellen der in Rede stehenden Art werden beispielsweise an Gas- oder Wasserrohren verspannt, um mit Hilfe von an die Anbohrschellen anschließbaren Anbohrarmaturen in den Wandungen der Gas- und Wasserrohre Bohrungen herstellen zu können, welche dann dem Anschluss von Zweigleitungen dienen. Die Anbohrschellen sind mit Dichtungen, in der Regel umlaufenden Dichtringen, versehen, so dass die Anbohrschellen im montierten Zustand am Versorgungsrohr dichtend anliegen.

Derartige Anbohrarmaturen weisen üblicherweise zwei zylinderförmige Halbschalen auf, deren Innendurchmesser dem Außendurchmesser des Versorgungsrohres entspricht, an dem die Anbohrschelle festgelegt werden soll. Zur Montage werden die beiden Halbschalen jeweils von oben und von unten an das Versorgungsrohr angelegt, so dass sich die jeweiligen Enden der Halbschalen gegenüberliegen. Anschließend werden die beiden Halbschalen mittels Schrauben verschraubt. In der Regel sind hierzu vier Schrauben erforderlich.

Alternativ ist es bekannt, die beiden Halbschalen der Anbohrschelle miteinander zu verschweißen. Beim Verschweißen müssen die Halbschalen aber ebenfalls mittels Schrauben zunächst vorfixiert werden, bis der Schweißprozess abgeschlossen ist. Die fertige Schweißnaht muss schließlich nochmals auf ihre Qualität hin überprüft werden.

Beide Alternativen, das Verschrauben und das Verschweißen, bedeuten einen erheblichen Aufwand für den Monteur. Dies gilt um so mehr, als dass die Montage von Anbohrschellen häufig in relativ engen Baugruben erfolgen muss, in denen der Monteur nur einen relativ geringen Bewegungsspielraum hat.

Es ist daher die Aufgabe der vorliegenden Erfindung, eine Rohrschelle, insbesondere Anbohrschelle, zu schaffen, welche die Montage auf dem Versorgungsrohr vereinfacht.

Die zuvor hergeleitete und aufgezeigte Aufgabe wird erfindungsgemäß bei einer Rohrschelle, insbesondere Anbohrschelle, der eingangs genannten Art dadurch gelöst, dass die beiden Enden in mindestens einem Verbindungsbereich miteinander zusammenwirkende Rastmittel aufweisen. Auf diese Weise kann der Monteur mit wenigen Handgriffen die Rohrschelle am Versorgungsrohr festlegen.

Gemäß einer vorteilhaften Ausgestaltung der Rohrschelle weisen die beiden Enden als Rastmittel miteinander korrespondierende Profile auf. Dabei kann das eine Ende ein nutförmiges Profil und das andere Ende ein federförmiges Profil aufweisen. Vorzugsweise weisen die beiden Profile miteinander in Eingriff bringbare Rastnasen auf. Derartige Profile sind in besonderem Maße geeignet, eine Rastverbindung mit möglichst geringem Aufwand, insbesondere unter relativ geringem Kräfteaufwand, zu realisieren.

Gemäß einer weiteren vorteilhaften Ausgestaltung weist zumindest ein Profil einen Oberflächenabschnitt auf, an welchem ein Abschnitt, insbesondere die Rastnase, des jeweils anderen Profils währen des Rastvorgangs entlang gleitet. So berühren sich zu Beginn des Rastvorgangs die beiden Enden der Rohrschelle im Bereich dieser beiden Abschnitte, wobei anschließend unter Krafteinwirkung, insbesondere mittels Verwendung eines Presswerkzeugs, beispielsweise einer hydraulischen Pressbacke, die beiden Abschnitte der jeweiligen Profile unter dauernder Berührung relativ zueinander verschoben werden, wobei die beiden korrespondierenden Profile schließlich, nachdem die beiden Abschnitte unter ständiger Berührung vollständig aneinander vorbei bewegt worden sind, miteinander verrasten.

In dem Zeitraum, in welchem die beiden Abschnitte, das heißt der Oberflächenabschnitt des einen Profils und der damit in Berührung stehenden Abschnitt des jeweils anderen Profils, aneinander vorbeibewegt werden, ist es wünschenswert, wenn mindestens eines der Rastmittel sich zumindest teilweise vorübergehend verformt, um, nachdem die beiden Abschnitt vollständig aneinander vorbeibewegt worden sind, sich wieder in die ursprüngliche Ausgangslage zurückzubewegen. Letzteres bewirkt dann die Rastverbindung. Um eine solche Verformung zuzulassen, ist gemäß einer weiteren vorteilhaften Ausgestaltung der erfindungsgemäßen Rohrschelle vorgesehen, dass zumindest eines der Profile einen Abschnitt aufweist, der in einem Schnitt quer zur Längsrichtung der Rohrschelle dünner als das übrige Profil ausgebildet ist. Vorzugsweise weist jedes der beiden Profile einen solchen dünneren Abschnitt auf, so dass sowohl das federförmige Profil als auch ein Teil des nutförmigen Profils vorübergehend nachgeben können, um sich schließlich wieder in ihre Ausgangslage zur Erzeugung der Rastverbindung zurückzubewegen.

Gemäß einer vorteilhaften Ausgestaltung ist der Oberflächenabschnitt des einen Profils, an welchem der Abschnitt des jeweils anderen Profils, insbesondere die Rastnase, während des Rastvorgangs entlang gleitet, gewölbt. Insbesondere ist der Oberflächenabschnitt in Umfangsrichtung gewölbt, wobei die Wölbung vorzugsweise nach außen gerichtet ist. Während des Pressvorgangs, in welchem zum Erzeugen der Rastverbindung die beiden Abschnitte der jeweiligen Profile aneinander entlang bewegt werden, gleitet der Abschnitt des einen Profils, insbesondere die Rastnase, gleichmäßig entlang der gewölbten Oberfläche des anderen Profils.

Dabei kann vorgesehen sein, dass der Oberflächenabschnitt eine oder mehrere Rillen aufweist, die in Längsrichtung der Rohrschelle verlaufen. Alternativ oder zusätzlich können auch in Längsrichtung verlaufende Wulste vorgesehen sein. Die Rillen und/oder Wulste erlauben, insbesondere wenn sie in einem Schnitt quer zur Längsrichtung haken- oder zahnförmig ausgebildet sind, dass der Monteur zunächst von Hand die beiden Enden soweit gegeneinander schieben kann, dass sie sich gegenseitig verklemmen - dieser Zustand lässt sich auch als Vorverrastung bezeichnen -, um anschließend das Presswerkzeug greifen und anlegen zu können, ohne dass die Enden gleichzeitig festgehalten werden müssen. Ferner wird die am Oberflächenabschnitt entlang gleitende Rastnase an einem unbeabsichtigten Zurückrutschen gehindert, wenn einmal das Presswerkzeug während des Rastvorgangs abrutschen sollte, so dass die beiden Enden der Rohrschelle nicht unkontrolliert zurückschnellen und möglicherweise zu Verletzungen führen können, sondern in der Position bleiben, welche die beiden Enden relativ zueinander zuletzt eingenommen hatten. Auch wird eine gewisse Führung der beiden Enden während des Rastvorgangs erreicht, nämlich in der Weise, dass die beiden Rastmittel, insbesondere die zusammenwirkenden Rastnasen der Profile, immer parallel zueinander ausgerichtet sind.

Gemäß wiederum einer weiteren vorteilhaften Ausgestaltung der erfindungsgemäßen Rohrschelle sind an dieser, insbesondere an den beiden Enden, Angriffsbereiche für ein Presswerkzeug, insbesondere das zuvor beschriebene Presswerkzeug, ausgebildet. Dabei können die Angriffsbereiche an den beiden Enden der Rohrschelle ausgeformt, insbesondere ausgefräst, sein. Es können aber auch Angriffsbereiche für das Presswerkzeug an den Enden der Rohrschelle angeformt sein. In diese Angriffsbereiche, die sich vorteilhafterweise gegenüberliegen und von denen vorzugsweise je einer an jedem der beiden Enden der Rohrschelle vorgesehen ist, können dann die beiden Greifenden der Klemmbacken des Presswerkzeugs angreifen.

Wie bereits zuvor beschrieben, weisen die beiden Enden der Rohrschelle in mindestens einem Verbindungsbereich miteinander zusammenwirkende Rastmittel auf. Gemäß einer vorteilhaften Ausgestaltung sind mehrere, insbesondere zwei, Verbindungsbereiche vorgesehen, in denen die beiden Enden miteinander verrastbar sind. Die Verbindungsbereiche sind vorzugsweise in Längsrichtung der Rohrschelle nebeneinander angeordnet, so dass im verpressten Zustand über die gesamte Länge der Rohrschelle gleichmäßige Verbindungskräfte wirken.

Gemäß einer weiteren vorteilhaften Ausgestaltung der Rohrschelle sind die zuvor beschriebenen Angriffsbereiche für das Presswerkzeug bezogen auf die Längsrichtung der Rohrschelle zwischen zwei benachbarten Verbindungsbereichen angeordnet. Vorzugsweise weist die Rohrschelle zwei Verbindungsbereiche und dazwischen angeordnete Angriffsbereiche für das Presswerkzeug auf. Auf diese Weise können in einem einzigen Arbeitsschritt mehrere separate Verbindungsbereiche in den gewünschten verrasteten Zustand gebracht werden. Es ist aber auch denkbar, die Angriffsbereiche bezogen auf die Längsrichtung im Bereich der Verbindungsbereiche vorzusehen, was insbesondere dann von Vorteil ist, wenn nur ein einzelner Verbindungsbereich vorgesehen ist.

Zur Sicherung der Pressverbindung über einen langen Zeitraum ist gemäß einer weiteren vorteilhaften Ausgestaltung vorgesehen, dass in jedem der beiden Enden mindestens eine, vorzugsweise in Längsrichtung der Rohrschelle verlaufende, Bohrung vorgesehen ist, wobei die Bohrungen im verrasteten Zustand der beiden Enden miteinander fluchten. Durch diese miteinander fluchtenden Bohrungen kann dann ein Sicherungsbolzen geführt werden.

Gemäß einer weiteren vorteilhaften Ausgestaltung der erfindungsgemäßen Rohrschelle weist diese zwei, insbesondere zylinderförmige, Halbschalen auf, die vorzugsweise schwenkbar miteinander verbunden sind.

Ferner ist gemäß noch einer weiteren vorteilhaften Ausgestaltung ein Anschlusstutzen für den Anschluss einer Anbohrarmatur vorgesehen. Der Anschlussstutzen, der insbesondere mit einem Schnellverschluss versehen ist, kann derart ausgebildet sein, wie dies in einer ebenfalls auf die Anmelderin zurückgehenden und am selben Tag eingereichten deutschen Patentanmeldung beschrieben ist. Insbesondere beim Anschluss einer Anbohrarmatur über einen Anschlussstutzen, aber auch ganz allgemein, ist es auch vorteilhaft, wenn die erfindungsgemäße Rohrschelle mit mindestens einer Dichtung, vorzugsweise umlaufenden Dichtringen, versehen ist, damit die Rohrschelle im montierten Zustand am Versorgungsrohr dichtend anliegt.

Die zuvor hergeleitete und aufgezeigte Aufgabe wird erfindungsgemäß ferner bei dem eingangs genannten Verfahren dadurch gelöst, dass die Rohrschelle zunächst um das Versorgungsrohr lose herumgelegt wird, so dass sich die beiden Enden in Umfangsrichtung der Rohrschelle gegenüberliegen, und anschließend die beiden Enden in mindestens einem Verbindungsbereich miteinander verrastet werden.

Es gibt nun eine Vielzahl von Möglichkeiten, die erfindungsgemäße Rohrschelle, insbesondere Anbohrschelle, und das erfindungsgemäße Verfahren auszugestalten und weiterzubilden. Hierzu wird beispielsweise verwiesen einerseits auf die dem Patentanspruch 1 nachgeordneten Patentansprüche, andererseits auf die Beschreibung eines Ausführungsbeispiels in Verbindung mit der Zeichnung. In der Zeichnung zeigt:
- Fig. 1: eine perspektivische Ansicht eines Ausführungsbeispiels einer Rohrschelle im unverpressten Zustand,
- Fig. 2: eine perspektivische Ansicht der Rohrschelle aus Fig. 1 mit angesetztem Presswerkzeug am Ende des Pressvorgangs,
- Fig. 3: eine perspektivische Ansicht der Rohrschelle aus Fig. 1 im verpressten Zustand vor einem Sicherungsvorgang,
- Fig. 4: eine perspektivische Ansicht der Rohrschelle aus Fig. 1 nach dem Sicherungsvorgang und
- Fig. 5a) u. b): eine vergrößerte Ansicht eines Details der Rohrschelle aus Fig. 1.

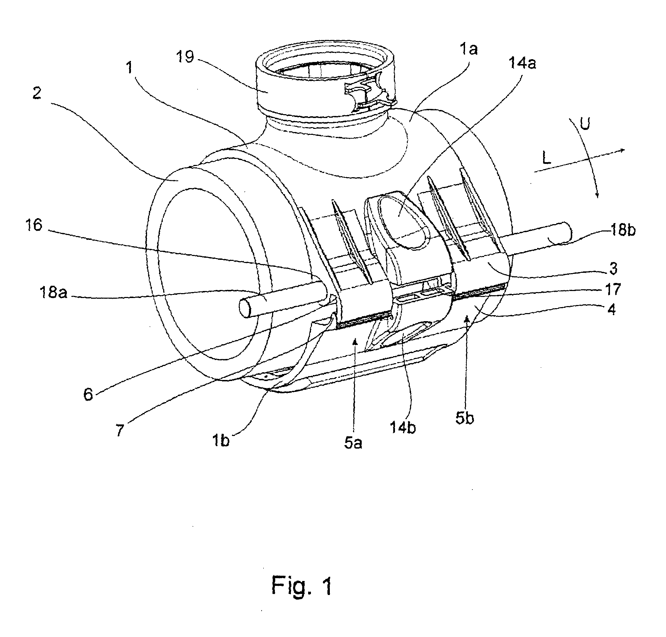

In Fig. 1 ist eine Rohrschelle 1 dargestellt, welche als Anbohrschelle mit einem Anschlussstutzen 19 für den Anschluss einer Anbohrarmatur ausgebildet ist.

Die Rohrschelle 1 weist zwei zylinderförmige Halbschalen 1a und 1b auf, welche schwenkbar miteinander verbunden sind und an einer Stelle um ein Versorgungsrohr 2 gelegt sind, an welcher später der Anschluss einer Zweigleitung erfolgen soll.

Die beiden Halbschalen 1a und 1b sind im dargestellten Zustand bereits an der Ober- und Unterseite an das Versorgungsrohr 2 angelegt, wobei zwei miteinander verbindbare Enden 3 und 4 der Rohrschelle 1 einander berühren, jedoch noch nicht miteinander verrastet sind.

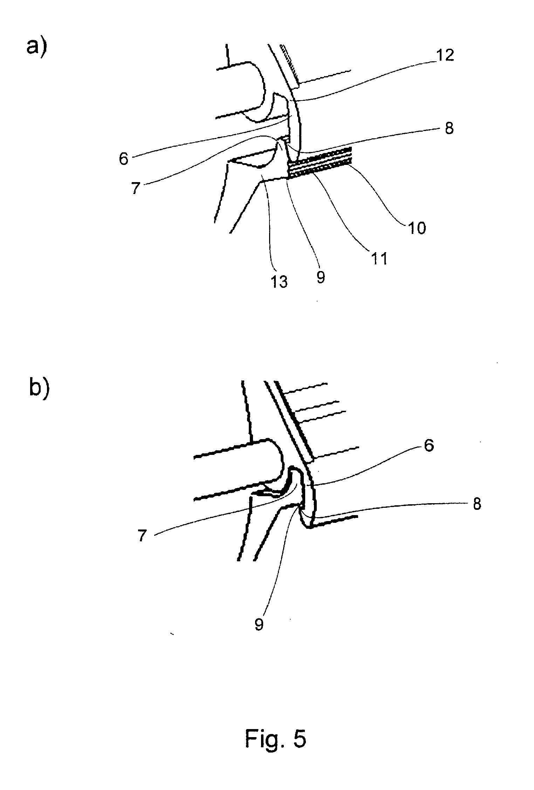

Die sich im verbundenen Zustand in Umfangsrichtung U der Rohrschelle 1 gegenüberliegenden Enden 3 und 4 weisen in zwei Verbindungsbereichen 5a und 5b miteinander zusammenwirkende Rastmittel auf. Die Rastmittel sind vorliegend als miteinander korrespondierende Profile 6 und 7 ausgebildet. Dabei weist das Ende 3 in jedem der Verbindungsbereiche 5a und 5b jeweils ein nutförmiges Profil 6 auf und das andere Ende 4 ein federförmiges Profil 7. Zum Bewirken der Rastverbindung weisen die beiden Profile 6 und 7 ferner miteinander in Eingriff bringbare Rastnasen 8 und 9 auf. Dabei weist, wie die Figuren 5a) und b) zeigen, der äußere Teil des nutförmigen Profils 6 eine Rastnase 8 auf, welche nach innen gerichtet ist, wohingegen das federförmige Profil 7 eine nach außen gerichtete Rastnase 9 aufweist.

Zwischen den beiden Verbindungsbereichen 5a und b sind ferner zwei übereinanderliegende Angriffsbereiche 14a und 14b für ein Presswerkzeug an die Rohrschelle 1 angeformt.

Schließlich sind in den beiden Enden 3 und 4 jeweils in Längsrichtung der Rohrschelle 1 verlaufende Bohrungen 16 und 17 vorgesehen, wobei im in Fig. 1 dargestellten Fall bereits in die Bohrungen 16 Sicherungsbolzen 18a und 18b eingeführt sind, welche im verpressten Zustand zur dauerhaften Sicherung des verpressten Zustands dienen sollen.

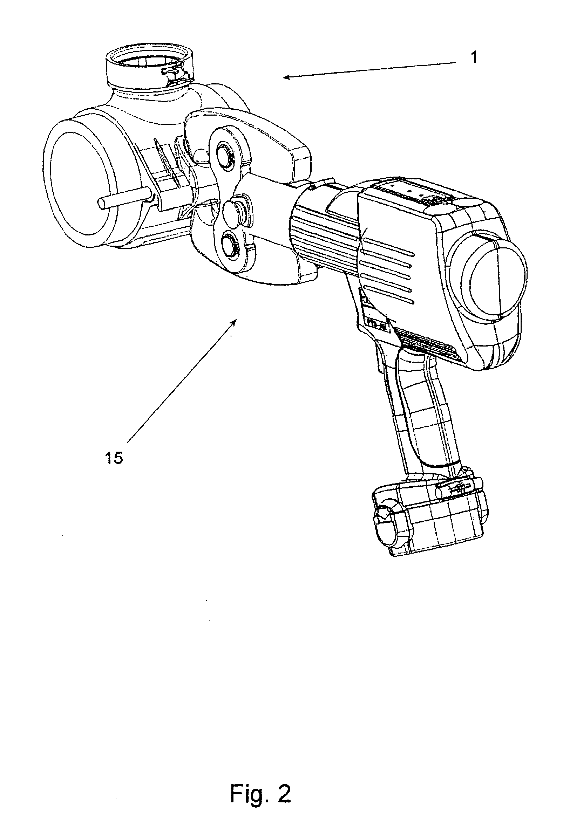

Zum Verpressen, und damit zum Erzeugen der Rastverbindung, werden, wie in Fig. 2 dargestellt ist, die beiden übereinanderliegenden Angriffsbereiche 14a und 14b von den jeweiligen Greifenden der Pressbackenhälften eines hydraulischen Presswerkzeugs 15 in Umfangsrichtung U der Rohrschelle 1 zusammengedrückt.

Wie die Figuren 1 und 5a) zeigen, berühren sich die beiden Profile 6 und 7 bereits vor dem Verpressen. Wird nun das Presswerkzeug angesetzt und in Betrieb genommen, so werden die beiden Profile 6 und 7 aufeinander zu bewegt. Dabei weist das Profil 7 einen in Umfangsrichtung U nach außen gewölbten Oberflächenabschnitt 10 auf, an welchem die Rastnase 8 des anderen Profils 6 während des Zusammenpressens entlang gleitet. Mehrere in Längsrichtung L der Rohrschelle 1 verlaufende Rillen 11 im Oberflächenabschnitt 10 wirken durch ihre zahnförmige Ausbildung mit der Rastnase 8 so zusammen, dass der Monteur zunächst von Hand die beiden Enden 3 und 4 soweit gegeneinander schieben kann, dass sie sich gegenseitig verklemmen, um anschließend das Presswerkzeug 15 greifen und anlegen zu können, ohne dass die Enden 3 und 4 gleichzeitig festgehalten werden müssen.

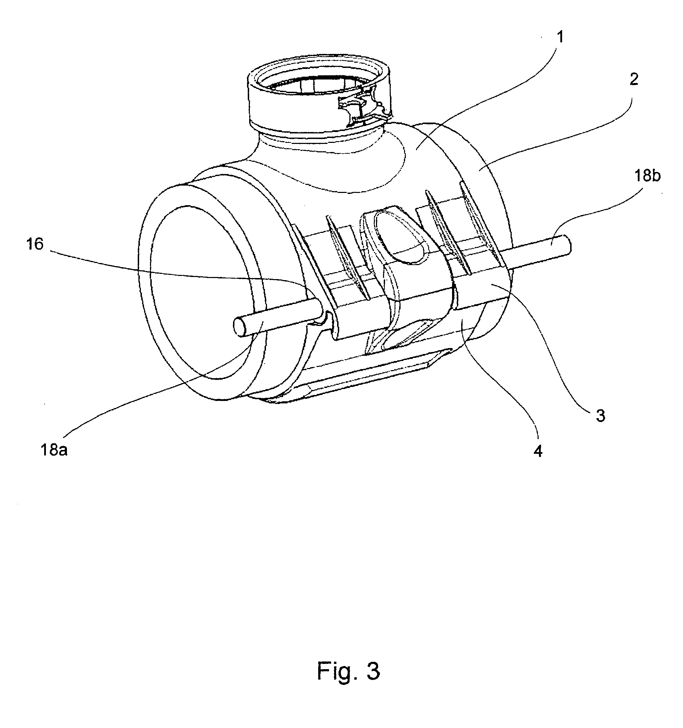

Beide Profile 6 und 7 weisen ferner jeweils einen Abschnitt 12 und 13 auf, der in einem Schnitt quer zur Längsrichtung L der Rohrschelle 1 dünner als das übrige Profil ausgebildet ist. Auf diese Weise wird erreicht, dass sich während des Pressvorgangs die als Rastmittel dienenden Profile 6 und 7 elastisch verformen können, um nach Beendigung des Pressvorgangs sich wieder in ihre ursprüngliche Form zurückzubewegen. Letzteres ist in Fig. 3 in perspektivischer Ansicht und in Fig. 5b) in einer vergrößerten Detailansicht dargestellt. Man erkennt deutlich, dass im nunmehr verrasteten Zustand die beiden Rastnasen 8 und 9 der Profile 6 und 7 derart miteinander in Eingriff sind, dass die beiden Enden 3 und 4 der Rohrschelle 1 nicht mehr ohne weiteres in Umfangsrichtung U auseinander bewegt werden können.

Um den verpressten Zustand darüber hinaus dauerhaft zu sichern, sind in den Bohrungen 16 und 17 der Enden 3 und 4 geführte Sicherungsbolzen 18a und 18b vorgesehen. In Fig. 3 ist der verpresste Zustand vor der endgültigen Sicherung mittels Sicherungsbolzen 18a und 18b dargestellt. In diesem Zustand fluchten die Bohrungen 16 und 17 - die Bohrungen 16 sind im oberen Ende 3 und die Bohrungen 17 im unteren Ende 4 vorgesehen - derart miteinander, dass die Sicherungsbolzen 18a und 18b vollständig in die Bohrungen 16 und 17 getrieben werden können, und zwar sowohl im Verbindungsbereich 5a als auch im Verbindungsbereich 5b.

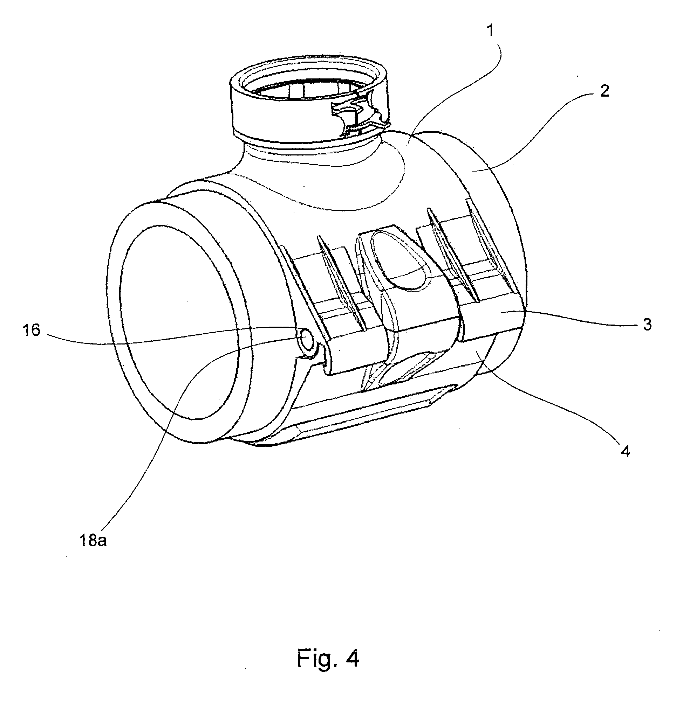

Letzteren Zustand, also den Zustand nach endgültiger Sicherung, zeigt schließlich Fig. 4. Man erkennt deutlich, dass die Bolzen 18a und 18b vollständig in den Bohrungen 16 und 17 versenkt sind, wodurch sich eine dauerhaft gesicherte und damit nahezu unlösbare Verbindungsanordnung der Rohrschelle 1 mit dem Versorgungsrohr 2 ergibt.

## Patentansprüche

1. Rohrschelle (1), insbesondere Anbohrschelle, die um ein Versorgungsrohr (2) festlegbar ist, wobei die Rohrschelle (1) zwei miteinander verbindbare Enden (3,4) aufweist, die sich im verbundenen Zustand in Umfangsrichtung (U) der Rohrschelle (1) gegenüberliegen, wobei die beiden Enden (3,4) in mindestens einem Verbindungsbereich (5a,5b) als miteinander zusammenwirkende Rastmittel miteinander korrespondierende Profile (6,7) aufweisen, wobei zumindest ein Profil (7) einen mit einer oder mehreren in Längsrichtung (L) der Rohrschelle (1) verlaufende Rillen (11) und/oder Wulste versehenen Oberflächenabschnitt (10) für eine Vorverrastung aufweist und wobei das jeweils andere Profil (6) einen Abschnitt (8), insbesondere eine Rastnase (8), aufweist, der während des Rastvorgangs an dem Oberflächenabschnitt (10) entlang gleitet, wobei an der Rohrschelle (1) Angriffsbereiche (14a,14b) für ein Presswerkzeug (15) für eine endgültige Verrastung ausgebildet sind,
**dadurch gekennzeichnet, dass** sich, während der Abschnitt (8) an dem Oberflächenabschnitt (10) für eine Vorverrastung entlang gleitet, mindestens eines der Profile (6,7) solange Verformt, bis sich der Abschnitt (8) am Oberflächenabschnitt (10) vollständig vorbeibewegt hat, und sich wieder in die ursprüngliche Ausgangslage zu einer endgültigen Verrastung zurückbewegt, nachdem sich der Abschnitt (8) am Oberflächenabschnitt (10) vollständig vorbeibewegt hat.

2. Rohrschelle (1) nach Anspruch 1, **dadurch gekennzeichnet, dass** das eine Ende (3) ein nutförmiges Profil (6) und das andere Ende (4) ein federförmiges Profil (7) aufweist.

3. Rohrschelle (1) nach Anspruch 1 oder 2, **dadurch gekennzeichnet, dass** die beiden Profile (6,7) miteinander in Eingriff bringbare Rastnasen (8,9) aufweisen.

4. Rohrschelle (1) nach Anspruch 1, **dadurch gekennzeichnet, dass** der Oberflächenabschnitt (10), insbesondere in Umfangsrichtung (U), gewölbt ist, wobei die Wölbung vorzugsweise nach außen gerichtet ist.

5. Rohrschelle (1) nach Anspruch 1, **dadurch gekennzeichnet, dass** die Rillen (11) und/oder die Wulste in einem Schnitt quer zur Längsrichtung (L) haken- oder zahnförmig ausgebildet sind.

6. Rohrschelle (1) nach einem der Ansprüche 1 bis 5, **dadurch gekennzeichnet, dass** zumindest eines der Profile (6,7) einen Abschnitt (12,13) aufweist, der in einem Schnitt quer zur Längsrichtung (L) der Rohrschelle (1) dünner als das übrige Profil (6,7) ausgebildet ist.

7. Rohrschelle (1) nach einem der Ansprüche 1 bis 6, **dadurch gekennzeichnet, dass** mehrere, insbesondere zwei, Verbindungsbereiche (5a, 5b) vorgesehen sind, in denen die beiden Enden (3,4) miteinander verrastbar sind.

8. Rohrschelle (1) nach Anspruch 7, **dadurch gekennzeichnet, dass** die Angriffsbereiche (14a,14b) bezogen auf die Längsrichtung (L) der Rohrschelle (1) zwischen zwei benachbarten Verbindungsbereichen (5a,5b) angeordnet sind.

9. Rohrschelle (1) nach einem der Ansprüche 1 bis 8, **dadurch gekennzeichnet, dass** in jedem der beiden Enden (3,4) mindestens eine, vorzugsweise in Längsrichtung (L) der Rohrschelle (1) verlaufende, Bohrung (16,17) vorgesehen ist, wobei die Bohrungen (16,17) im verrasteten Zustand der beiden Enden (3,4) miteinander fluchten.

10. Rohrschelle (1) nach Anspruch 9, **dadurch gekennzeichnet, dass** durch die miteinander fluchtenden Bohrungen (16,17) ein Sicherungsbolzen (18a,18b) geführt werden kann.

11. Rohrschelle (1) nach einem der Ansprüche 1 bis 10, **dadurch gekennzeichnet, dass** die Rohrschelle (1) zwei, insbesondere zylinderförmige, Halbschalen (1a, 1b) aufweist.

12. Rohrschelle (1) nach Anspruch 11, **dadurch gekennzeichnet, dass** die Halbschalen (1a, 1b) schwenkbar miteinander verbunden sind.

13. Rohrschelle (1) nach einem der Ansprüche 1 bis 12, **dadurch gekennzeichnet, dass** ein Anschlussstutzen (19) für den Anschluss einer Anbohrarmatur vorgesehen ist.

14. Verfahren zum Festlegen einer Rohrschelle (1), insbesondere einer Rohrschelle (1) nach einem der vorangehenden Ansprüche, vorzugsweise einer Anbohrschelle, um ein Versorgungsrohr (2), wobei die Rohrschelle (1) zwei miteinander verbindbare Enden (3,4) aufweist, wobei die Rohrschelle (1) zunächst um das Versorgungsrohr (2) lose herumgelegt wird, so dass sich die beiden Enden (3,4) in Umfangsrichtung (U) der Rohrschelle (1) gegenüberliegen, **dadurch gekennzeichnet, dass** die beiden Enden (3,4) danach zunächst vorverrastet werden und anschließend in mindestens einem Verbindungsbereich (5a, 5b) mittels eines Presswerkzeugs (15), welches an an der Rohrschelle (1) angeordnete Angriffsbereiche (14a,14b) angreift, miteinander endgültig verrastet werden.

## Claims

1. A pipe clamp (1), in particular a tapping pipe clip, which can be fixed about a supply pipe (2), wherein the pipe clamp (1) has two ends (3, 4) which can be connected to each other and which, in the connected state, face each other in the circumferential direction (U) of the pipe clamp (1), wherein in at least one connecting region (5a, 5b), the two ends (3, 4) have profiles (6, 7) which correspond to each other and serve as latching means interacting with each other, wherein at least one profile (7) has a surface section (10) for pre-latching provided with one or a plurality of grooves (11) and/or beads running in the longitudinal direction (L) of the pipe clamp (1), and wherein the in each case other profile (6) has a section (8), in particular a latching nose (8), which slides along the surface section (10) during the latching process, wherein contact regions (14a, 14b) for a pressing tool (15) are formed on the pipe clamp (1) for a final latching,
**characterized in that** when the section (8) slides along the surface section (10) for pre-latching, at least one of the profiles (6, 7) deforms until the section (8) has moved completely past the surface section (10) and moves back again in the initial starting position for a final latching after the section (8) has moved completely past the surface section (10).

2. The pipe clamp (1) according to claim 1, **characterized in that** the one end (3) has a groove-shaped profile (6) and the other end (4) has a tongue-shaped profile (7).

3. The pipe clamp (1) according to claim 1 or 2, **characterized in that** the two profiles (6, 7) have latching noses (8, 9) which can be brought in engagement with each other.

4. The pipe clamp (1) according to claim 1, **characterized in that** the surface section (10) is curved, in particular in the circumferential direction (U), wherein the curvature is preferably directed outwardly.

5. The pipe clamp (1) according to claim 1, **characterized in that** in a cross-section transverse to the longitudinal direction (L), the grooves (11) and/or the beads are formed in a hook- or tooth-shaped manner.

6. The pipe clamp (1) according to any one of the claims 1 to 5, **characterized in that** at least one of the profiles (6, 7) has a section (12, 13) which, in a cross-section transverse to the longitudinal direction (L) of the pipe clamp (1), is formed thinner than the remaining profile (6, 7).

7. The pipe clamp (1) according to any one of the claims 1 to 6, **characterized in that** a plurality of connecting regions (5a, 5b), in particular two connecting regions, are provided in which the two ends (3, 4) can be latched together.

8. The pipe clamp (1) according to claim 7, **characterized in that** with regard to the longitudinal direction (L) of the pipe clamp (1), the contact regions (14a, 14b) are arranged between two adjacent connecting regions (5a, 5b).

9. The pipe clamp (1) according to any one of the claims 1 to 8, **characterized in that** in each of the two ends (3, 4) at least one bore (16, 17) is provided which preferably runs in the longitudinal direction (L) of the pipe clamp (1), wherein in the latched state of the two ends (3, 4), the bores (16, 17) are aligned with each other.

10. The pipe clamp (1) according to claim 9, **characterized in that** a locking bolt (18a, 18b) can be inserted through the bores (16, 17) which are aligned with each other.

11. The pipe clamp (1) according to any one of the claims 1 to 10, **characterized in that** the pipe clamp (1) has two half shells, in particular cylindrical half shells (1a, 1b).

12. The pipe clamp (1) according to claim 11, **characterized in that** the half shells (1a, 1b) are connected to each other in a pivotable manner.

13. The pipe clamp (1) according to any one of the claims 1 to 12, **characterized in that** a connecting piece (19) is provided for connecting a tapping fixture.

14. A method for fixing a pipe clamp (1), in particular a pipe clamp (1) according to any one of the preceding claims, preferably a tapping pipe clip, about a supply pipe (2), wherein the pipe clamp (1) has two ends (3, 4) which can be connected to each other, wherein the pipe clamp (1) is first loosely placed around the supply pipe (2) so that the two ends (3, 4) face each other in the circumferential direction (U) of the pipe clamp (1), **characterized in that** after this, the two ends (3, 4) are first pre-latched and subsequently, in at least one connecting region (5a, 5b), are finally latched together by means of a pressing tool (15) which engages with contact regions (14a, 14b) arranged on the pipe clamp (1).

## Revendications

1. Collier d'attache pour tuyau (1), en particulier collier perce-tuyau, qui peut être fixé sur un tuyau d'alimentation (2), sachant que le collier d'attache pour tuyau (1) présente deux extrémités (3, 4) pouvant être reliées entre elles et qui se font face, dans l'état relié, dans le sens périphérique (U) du collier d'attache pour tuyau (1), sachant que les deux extrémités (3, 4) présentent des profilés (6, 7) correspondant l'un à l'autre en tant que moyens d'encliquetage coopérant l'un avec l'autre dans au moins une zone de liaison (5a, 5b), sachant qu'au moins un profilé (7) présente une section de surface (10) pour un pré-encliquetage, dotée d'une ou plusieurs cannelure(s) (11) et/ou de bourrelets dans le sens longitudinal (L) du collier d'attache pour tuyau (1), et sachant que l'autre profilé respectif (6) présente une section (8), en particulier un ergot d'encliquetage (8), qui glisse le long de la section de surface (10) pendant l'encliquetage, sachant que des zones d'attaque (14a, 14b) pour un outil de compression (15) sont formées sur le collier d'attache pour tuyau (1) pour un encliquetage final,
**caractérisé en ce que** pendant que la section (8) glisse le long de la section de surface (10) pour un pré-encliquetage, au moins un des profilés (6, 7) se déforme jusqu'à ce que la section (8) ait avancé complètement sur la section de surface (10) et revient à nouveau dans la position de départ d'origine pour un encliquetage final, après que la section (8) ait avancé complètement sur la section de surface (10).

2. Collier d'attache pour tuyau (1) selon la revendication 1, **caractérisé en ce que** l'une extrémité (3) présente un profilé en forme de rainure (6) et que l'autre extrémité (4) présente un profilé (7) en forme de ressort.

3. Collier d'attache pour tuyau (1) selon la revendication 1 ou 2, **caractérisé en ce que** les deux profilés (6, 7) présentent des ergots d'encliquetage (8, 9) pouvant être mis en prise l'un avec l'autre.

4. Collier d'attache pour tuyau (1) selon la revendication 1, **caractérisé en ce que** la section de surface (10), en particulier dans le sens périphérique (U), est bombée, sachant que le bombement est de préférence dirigé vers l'extérieur.

5. Collier d'attache pour tuyau (1) selon la revendication 1, **caractérisé en ce que** les cannelures (11) et/ou les bourrelets sont formés comme des crochets ou des dents dans une coupe transversale au sens longitudinal (L).

6. Collier d'attache pour tuyau (1) selon l'une des revendications 1 à 5, **caractérisé en ce qu'**au moins un des profilés (6, 7) présente une section (12, 13) qui, dans une coupe transversale au sens longitudinal (L) du collier d'attache pour tuyau (1), est plus fine que le reste du profilé (6, 7).

7. Collier d'attache pour tuyau (1) selon l'une des revendications 1 à 6, **caractérisé en ce que** plusieurs, en particulier deux, zones de liaison (5a, 5b) sont prévues, dans lesquelles les deux extrémités (3, 4) peuvent être encliquetées l'une dans l'autre.

8. Collier d'attache pour tuyau (1) selon la revendication 7, **caractérisé en ce que** les zones d'attaque (14a, 14b) sont disposées entre deux zones de liaison (5a, 5b) voisines, par rapport au sens longitudinal (L) du collier d'attache pour tuyau (1).

9. Collier d'attache pour tuyau (1) selon l'une des revendications 1 à 8, **caractérisé en ce que** dans chacune des deux extrémités (3, 4), au moins un perçage (16, 17), de préférence dans le sens longitudinal (L) du collier d'attache pour tuyau (1), est prévu, sachant que les perçages (16, 17) sont alignés l'un avec l'autre dans l'état encliqueté de deux extrémités (3, 4).

10. Collier d'attache pour tuyau (1) selon la revendication 9, **caractérisé en ce qu'**un boulon de sûreté (18a, 18b) peut être dirigé à travers les perçages (16, 17) alignés l'un avec l'autre.

11. Collier d'attache pour tuyau (1) selon l'une des revendications 1 à 10, **caractérisé en ce que** le collier d'attache pour tuyau (1) présente deux demi-coques (1a, 1b), en particulier cylindriques.

12. Collier d'attache pour tuyau (1) selon la revendication 11, **caractérisé en ce que** les demi-coques (1a, 1b) sont reliées de manière à pouvoir pivoter entre elles.

13. Collier d'attache pour tuyau (1) selon l'une des revendications 1 à 12, **caractérisé en ce qu'**une tubulure de raccord (19) est prévue pour le raccordement d'un dispositif de perçage.

14. Procédé pour fixer un collier d'attache pour tuyau (1), en particulier un collier d'attache pour tuyau (1) selon l'une des revendications précédentes, de préférence un collier perce-tuyau, autour d'un tuyau d'alimentation (2), sachant que le collier d'attache pour tuyau (1) présente deux extrémités (3, 4) pouvant être reliées entre elles, sachant que le collier d'attache pour tuyau (1) est d'abord placé de manière lâche autour du tuyau d'alimentation (2), de façon à ce que les deux extrémités (3, 4) soient en face l'une de l'autre dans le sens périphérique (U) du collier d'attache pour tuyau (1), **caractérisé en ce que** les deux extrémités (3, 4) sont ensuite d'abord pré-encliquetées et sont enfin encliquetées dans au moins une zone de liaison (5a, 5b) au moyen d'un outil de compression (15) qui se met en prise sur des zones d'attaque (14a, 14b) disposées sur le collier d'attache pour tuyau (1).
